# EUROPEAN PATENT SPECIFICATION

(11) **EP 1 171 545 B1**
(45) Date of publication and mention of the grant of the patent: **18.02.2004**
(21) Application number: 00917067.1
(22) Date of filing: 07.04.2000
(51) Int. Cl.: C09K 21/12, C08K 5/521, C08J 9/00

(54) **FLAME RETARDANT BLEND CONTAINING MONOMERIC AND OLIGOMERIC FLAME RETARDANTS**
FLAMMHEMMENDE MISCHUNG WELCHE MONOMERE UND OLIGOMERE FLAMMHEMMER ENTHÄLT
MELANGE IGNIFUGEANT CONTENANT DES IGNIFUGEANT MONOMERES ET OLIGOMERES

(30) Priority: 12.04.1999 US 291153
(43) Date of publication of application: 16.01.2002
(73) Proprietor: Akzo Nobel N.V., 6824 BM Arnhem (NL)
(72) Inventor: BRADFORD, Larry, L., Lufkin, Texas 75904 (US); PINZONI, Emanuel, Hawthorne, NJ 07506 (US); WILLIAMS, Barbara, A., New York, NY 10032 (US); HALCHAK, Theodore, Upper Montclair, NJ 07043 (US)
(74) Representative: Schalkwijk, Pieter Cornelis
(86) International application number: PCT/EP2000/003198
(87) International publication number: WO 2000/061700

(56) References cited:
- EP-A- 0 018 176
- EP-A- 0 523 991
- EP-A- 0 658 580
- US-A- 4 382 042

## Description

### Background of the invention

There is a wide variety of disclosures in regard to flame retardant additives for polymers, such as polyurethane foams. Two representative examples of disclosures of this type, which relate to blends of two differing flame retardant additives, include the following:
U.S. Patent No. 4,273,881 to J.G. Otten describes the use of a 50:50 mixture of flame retardant A, sold under the trademark ANTIBLAZE 19, and bis-(2-chloroethyl)-2-chloroethyl-phosphonate (See Col. 9, lines 61-62).
U.S. Patent No. 3,956,200 to J. Biranowski describes the use of flame retardant blends comprising a polyglycol hydrogen polyphosphonate and an additive, nonreactive flame retardant in a ratio of from about 20:1 to 1:1, preferably from about 5:1 to 1:1.

In addition to the foregoing patent disclosures, certain blends of monomeric and oligomeric flame retardants have also been sold to the polyurethane industry, including compositions carrying the trademarks FYROL® 25 and FYROL® EFF of Akzo Nobel Chemicals Inc. The product sold under the former mark includes an oligomer containing a blend of both phosphate and phosphonate moieties, whereas the product sold under the latter mark contains a major amount (about 66%) of the oligomeric component and a minor amount (about 32.5%) of the monomeric flame retardant component.

### Summary of the Invention

The present invention relates to a flame retardant blend comprising: (a) a monomeric halogenated organic flame retardant that is adapted for use in a polyurethane foam formulation; and (b) an oligomeric organophosphate flame retardant having a phosphorus content of no less than about 10%, by weight, and at least three phosphate ester units therein, the amount of (a) in the blend being no less than the amount of (b). The use of this blend in polyurethane foam compositions forms another aspect of the invention.

### Description of the Preferred Embodiments

The monomeric halogenated flame retardants that form one essential component of the blends of the present invention are those flame retardants additives that have hitherto been used in conferring flame retardancy on polyurethane foams (especially flexible polyurethane foams).
One representative class that can be selected includes the halogenated phosphate esters containing from about 1 to about 5 carbon atoms in their alkyl groups. Representative additives include: tris(dichloropropyl) phosphate; tris(2-chloroethyl) phosphate; tris(dibromopropyl) phosphate; tris(bromochloropropyl)-phosphate; and the like. Another class are polybrominated diphenyl oxide-containing additives, such as those comprising pentabromodiphenyl oxide (e.g., about 65% to about 85% of pentabromodiphenyl oxide and about 15% to about 35% of an aryl phosphate). The amount of such additives in the blend will range from about 50% to about 95%, by weight of the blend, more preferably from about 60% to about 90%. Also combinations of halogenated phosphate esters and polybrominated diphenyl oxide-containing additives can be used.

The second component of the blend is an oligomeric organophosphate flame retardant having a phosphorus content of no less than about 10%, by weight, and at least three phosphate ester units therein (at least two phosphate ester repeat units and a phosphate capping unit). The amount of this additive in the blend will range from about 5% to about 50%, by weight of the blend, more preferably from about 10% to about 30%. A representative additive of this type is generally described in U.S. Patent No. 4,382,042 to T.A. Hardy, with the non-halogenated versions being preferred (e.g., especially the ethyl group-containing composition). These oligomers can be formed by reacting phosphorus pentoxide with the selected trialkyl phosphate (e.g., triethyl phosphate) to form a polyphosphate ester containing P-O-P bonds that is then reacted with epoxide (e.g., ethylene oxide) to form the desired product. This oligomeric organophosphate flame retardant is preferably of the formula: 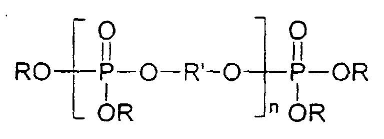 wherein n (which designates the "repeat" phosphate ester units) lies in the range, on a number average basis, of from 2 to about 20, preferably from 2 to about 10, and R is selected from the group consisting of alkyl, haloalkyl, and hydroxyalkyl, and R' is alkylene. The alkyl and alkylene groups will generally contain from about two to about ten carbon atoms.
Especially preferred oligomeric polyphosphates for use herein will comprise ethyl and ethylene groups as the alkyl and alkylene moieties, will have a hydroxy functionality of no more than about 30 mg KOH/g, an acid number of no more than about 2.5 mg KOH/g, and a phosphorus content that ranges from about 17% to about 24%, by weight.

The flame retardant blend of this invention can be added to the selected polyurethane foam formulation at from about 2 to about 35 parts by weight of the blend per 100 parts by weight of the polyol in the formulation (percent by weight on polyol, polyol%w/w). The weight percentage of phosphorus in the final polyurethane foam formulation will range from about 0.25 wt% to about 3.5 wt%. The foregoing type of flame retardant blend is especially adapted for use in flexible and rigid polyurethane foams and in certain embodiments (e.g., at ratios of from about 1:1 to about 20:1 of the monomeric additive:oligomeric additive) in typical polyester polyurethane flexible foams the blend has shown unexpectedly greater efficiency than the additive sums of its individual components. This performance is especially attractive, since the oligomeric material typically is much more expensive than the monomeric material, making cost efficiency of the blend particularly beneficial.

The density of the foam is an important factor. In general, the higher the density, the less flame retardant additive will be required to pass the flame test. This effect is more pronounced when the blended product according to the invention is used. For example, the present blend when at a 3:1 ratio will pass the TB117 test in a foam with a density of 16 kg.m⁻³ (hereinafter called 1.0 density foam, since its weight is 1.0 pound per cubic foot) at 14 polyol%w/w. The same blend, when used in a foam with a density of 28.8 kg.m⁻³ (hereinafter called 1.8 density foam) will meet the TB117 test when used in an amount of 6 polyol%w/w.

The efficiency of a blend of phosphorus-containing products as a flame retardant (as measured by the amount required to pass a given test) can be compared with the efficiency of the individual compounds by determining the amount of phosphorus that is required to pass a given test. For blends of two products the required amount of phosphorus to pass said test is expected to fall between the amounts needed for the individual compounds. If less phosphorus is required for the blend than for either individual product, it is clearly synergistic/advantageous. For example, (from Examples 9-19) additive product A, a monomeric halogenated flame retardant, requires 0.99% of phosphorus to pass the TB117 test, and product B, an oligomeric organophosphate flame retardant, requires 0.95% phosphorus to meet the TB117 test. The blend of the two products in a 3:1 ratio requires 0.60% phosphorus to meet said test, all using 1.8 density foam.

As disclosed in U.S. Patent No. 3,956,200, preferred flexible foams could be made as follows:
The actual incorporation of the novel flame retardant blend in the preparation of flexible polyurethane foams may be accomplished by means of a variety of procedures including the preliminary admixture of the blend, or its individual components, with the polyol reagent prior to the polymerization reaction or the blend, or the two individual components of the blend, may be introduced as separate streams to a foam machine mixing head.

As examples of organic polyisocyanates which can be employed to make the polyurethane foams there can be employed one or more of such compounds as: toluene-2,4-diisocyanate; toluene-2,6-diisocyanate; 4-methoxy-1,3-phenylene diisocyanate; diphenyl methane-4,4'-diisocyanate; 4-chloro-1,3-phenylene-diisocyanate; 4-isopropyl-1,3-phenylene-diisocyanate; 4-ethoxy-1,3-phenylene-diisocyanate; 2,4-diisocyanate-diphenyl ether; 3,3'-dimethyl-4,4'-diisocyanato-diphenyl methane; mesitylene diisocyanate; durylene diisocyanate; 4,4'-methylene-bis(phenylisocyanate); benzidine diisocyanate; o-nitrobenzidine diisocyanate; 4,4'-diisocyanatodibenzyl; 3,3'-bitolylene-4,4'-diisocyanate; 1,5-naphthalene diisocyanate; tetramethylene diisocyanate; hexamethylene diisocyanate; decamethylene diisocyanate; toluene-2,4,6-triisocyanate; tritolylmethane triisocyanate; 2,4,4'-triisocyanatodiphenyl ether; the reaction product of toluene diisocyanate with trimethylolpropane; and, the reaction product of toluene diisocyanate with 1,2,6-hexanetriol.

Alternatively, as the polyisocyanate there can be used prepolymers made by reacting one or more of the above polyisocyanates with a polyhydroxy compound such as a polyester having terminal hydroxyl groups, a polyhydric alcohol, glycerides or hydroxy containing glycerides, etc. The prepolymers should have terminal isocyanate groups. To insure their presence it is frequently desirable to employ an excess of 5% or more of the polyisocyanate in forming the prepolymer. Typical examples of such prepolymers having isocyanate end groups are those formed from toluene diisocyanate and polyhydroxy compounds. In most cases, a mixture of 80% of the 2,4-isomer and 20% of the 2,6-isomer of toluene diisocyanate is employed in making these prepolymers. Thus, there can be used the prepolymers resulting from the reaction between toluene diisocyanate and castor oil, blown tung oil, blown linseed oil or blown soya oil, and of toluene diisocyanate and the polyester of ethylene glycol, propylene glycol and adipic acid.

Examples of suitable polyols are polyethylene glycols, polypropylene glycols; ethylene glycol; diethylene glycol; triethylene glycol; propylene glycol; dipropylene glycol; tripropylene glycol; 1,4-butanediol; thiodiglycol; glycerol; trimethylolethane; trimethylolpropane; ether triols from glycerine and propylene oxide; ether containing triols from 1,2,6-hexanetriol and propylene oxide; sorbitol-propylene oxide adducts; pentaerythritol-propylene oxide adducts; trimethylol phenol; oxypropylated sucrose; triethanolamine; pentaerythritol; diethanolamine, castor oil; blown linseed oil; blown soya oil; N,N,N',N'-tetrakis (2-hydroxyethyl) ethylenediamine; N,N,N',N'-tetrakis (2-hydroxypropyl) ethylenediamine; mixed ethylene glycol-propylene glycol adipate resin; polyethylene adipate phthalate and polyneopentylene sebacate.

In preparing the foamed polyurethanes, there can be used any of the conventional basic catalysts such, for example, as N-methyl morpholine, N-ethyl morpholine, 1,2,4-trimethylpiperazine, trimethyl amine, triethyl amine, tributyl amine and other trialkyl amines, the esterification product of adipic acid and diethylethanolamine, triethyl amine citrate, 3-morpholinopropionamide, 1,4-bis(2-hydroxypropyl)-2-methylpiperazine, 2-diethylaminoacetamide, 3-diethylaminopropionamide, diethylethanolamine, triethylenediamine, N,N,N',N'-tetrakis (2-hydroxypropyl) ethylenediamine N,N'-dimethylpiperazine, N,N-dimethylhexahydroaniline, tribenzylamine and sodium phenolate. Also applicable are tin compounds, e.g. hydrocarbon tin acylates such as dibutyltin dilaurate, dibutyltin diacetate, dibutyltin dioctoate, tributyltin monolaurate, dimethyltin diacetate, dioctyltin diacetate, dilauryltin diacetate, dibutyltin maleate and alkyltin alkoxides, e.g., dibutyltin diethoxide, dibutyltin dimethoxide, diethyltin dibutoxide as well as other tin compounds, e.g., octylstannoic acid, trimethyltin hydroxide, trimethyltin chloride, triphenyltin hydride, triallyltin chloride, tributyltin fluoride, dibutyltin dibromide, bis(carboethoxymethyl) tin diiodide, tributyltin chloride, trioctyltin acetate, butyltin trichloride or, octyltin tris(thiobutoxide), dimethyltin oxide, dibutyltin oxide, dioctyltin oxide, diphenyltin oxide, stannous octoate, and stannous oleate.

Conventional surfactants can be added in the amount of 1% or less, e.g., 0.2% by weight of the composition. The preferred surfactants are silicones, e.g., polydimethyl siloxane having a viscosity of 3 to 100 mPa.s (centistokes), triethoxydimethyl polysiloxane, molecular weight 850 copolymerized with a dimethoxypolyethylene glycol having a molecular weight of 750.

The foaming reaction can be carried out by adding water to the polyol prior to or simultaneously with the addition of the polyisocyanate. Alternatively, foams can be prepared by the use of a foaming or blowing agent. These are usually a liquefied, halogen substituted alkane such, for example, as methylene chloride. Especially preferred are those halogen substituted alkanes having at least one fluorine atom in their molecules such as dichlorodifluoromethane, dichloromonofluoromethane, chlorodifluoromethane, and dichlorotetrafluoroethane. In using these blowing agents they are uniformly distributed in either the polyol reactant or the polyisocyanate reactant whereupon the reactants are mixed permitting the temperature of the mixture to rise during the ensuing reaction above the boiling point of the liquefied gas so as to produce a porous polyurethane. It should also be noted that foaming may also be affected by combining the use of a blowing agent with the addition of water to the polyol.

The flame retardant polyurethane foams resulting from the process of this invention may be utilized in all of the above noted end use applications for such foams and particularly those applications wherein their flame retardant properties render them particularly useful such, for example, as insulation materials for building construction.

The foregoing invention is further illustrated by the Examples that follow.

### EXAMPLES 1-8

The following flame retardant test data was generated using a typical polyether polyurethane flexible foam that was tested at nominal densities of 16, 24, and 28.8 kg.m⁻³ (1.0, 1.5, and 1.8 density foam, respectively). The formulation used to form the foam was prepared using a polyether polyol having a hydroxyl number of 56, a water level of from 3.55% to 5.6%, an amine level of about 0.25%, and an NCO index of 110.

The following standard tests were empoyed:
TB117, as published by the State of California Department of Consumer Affairs, Bureau of Home Furnishings and Thermal Insulation, 3485 Orange Grove Avenue, North Highlands, CA 95660-5595, Technical Bulletin No. 117, REQUIREMENTS, TEST PROCEDURE AND APPARATUS FOR TESTING THE FLAME RETARDANCE OF RESILIENT FILLING MATERIALS USED IN UPHOLSTERED FURNITURE, January 1980 (Cal 117 test), and
MVSS 302, as published by General Motors Corporation, Fisher Body Division, Material Development & Testing Laboratory, Test Method 302, including TM 32-10 ACCELERATED AGING (FLAMMABILITY), July 1983, and TM 32-12 FLAMMABILITY OF INTERIOR TRIM MATERIALS, January 1979, as also mentioned in 49 CFR 547.302, Flammability of interior materials (1984) (MVSS-302 test). A short description of the tests is as follows:
   A. TB 117 A Test: This test is a small-scale vertical test with a twelve-second-ignition time. The sample size was 30.5 * 7.6 * 1.3 cm (12" x 3 x ½"). The ignition source was removed after twelve seconds. A second clock is started if the sample continues to burn. The criteria for failing included: a sample exceeding an individual burn of eight inches or an average burn of six inches. The time criteria required that an individual specimen would not have an individual afterflame or afterglow exceeding ten seconds or an average afterflame or afterglow exceeding five seconds.
   B. TB 117 D Test: This test is a smoldering test in which a cigarette is used as the ignition source under a cotton cloth cover. The foam sample was covered with a standard velvet cotton cloth and was placed in a small wooden frame to form a mock chair. The back of the sample was 20.3 * 17.8 * 5.1 cm (8" x 7" x 2"), and the seat was 20.3 * 10.2 * 5.1 cm (8" x 4" x 2"). The sample was preweighed before testing and was again weighed after the test was finished. If the foam lost more than 20% of its weight, it was judged to be a failure.
   C. MVSS 302 Test: This test is a horizontal flame test that is used as a guideline for automobile manufactures. The sample size was 35.6 * 10.2 * 1.3 cm (14" x 4" x ½"). There is a line 3.8 cm (1½") from the ignition point. A flame was ignited for fifteen seconds. The ignition source was then turned off and the sample was rated. A "DNI" rating indicates that the sample did not support combustion ("did not ignite"). A rating of "SE" indicates that the sample ignited but did not burn to the timing zone, which is a point starting from the 3.8 cm (1½") mark to the 8.9 cm (3½") line. A rating of "SENBR" indicates that the sample burned past the 3.8 cm (1½") line but was extinguished before the 8.9 cm (3½") mark. A rating of "SE/B" indicates that a sample burned past the 8.9 cm (3½") mark but was extinguished before the endpoint. An inch per minute rate was then calculated. The burn rate indicates that a sample burned passed the 8.9 cm (3½") mark. An indication of a burn rate or an SE/B rating that was higher than 10.2 cm/min (4.0 in/min) indicates failure in accordance with this test. For this study a minimum performance of SENBR was required.

A number of flame retardant additives were used in TB117 and MVSS 302 tests in a variety of foams, either alone or in combination, as further described below. They were: tris(dichloropropyl) phosphate, available under the trademark FYROL® FR-2 from Akzo Nobel Chemicals Inc.; a blend of 75% pentabromodiphenyloxide and 25 % triaryl phosphates, available under the trademark FYROL® PBR from Akzo Nobel Chemicals Inc.; and "PEEOP", which is a poly-(ethylethyleneoxy) phosphate, of the type described in copending U.S. Serial No. 08/677,283, having a molecular weight of about 915 (number average)/1505 (weight average), a typical hydroxyl number of under about 5.
Since the TB117 test requires passing two very different tests, the effect of each flame retardant package on each test must be considered. For example, at low densities it is easier to pass the smoldering test (Part D) while at higher density it is easier to pass the flaming test (Part A). The Fyrol® PBR brand additive generally performs better in the smoldering test than the Fyrol FR-2 additive. This is only important when the smoldering test becomes the limiting test to pass. In the following table the level to pass each test is shown as well as the overall test pass iimit:(F = Flaming part A and S = Smolder part D).

The following data illustrates that the relative performance of flame retardant additives varies with the foam density as well as the test method used. The described blends give unexpected synergism in some of these combinations (as the density increases, less flame retardant additive is usually required to meet a specific test):

| Passing FR Levels | | | | | | |
|---|---|---|---|---|---|---|
| Product | TB117 1.0 density foam | TB117 1.5 density foam | TB117 1.8 density foam | MVSS 302 1.0 density foam SENBR | MVSS 302 1.5 density foam SENBR | MVSS 302 1.8 density foam SENBR |
| FYROL® FR-2 | 16 F16 S<14 | 15 F15 S9 | 13 F7 S13 | 16 | 15 | 7 |
| FYROL PBR | 15 F15 S4 | 12 F12 S5 | 7 F7 S4 | 16 | 12 | 6 |
| PEEOP | 7 F S | 5 F5 S<5 | 5 F4 S5 | 7 | 5 | 4 |
| FYROL FR-2: PEEOP (1:1) | 12 F12 S<10 | 6 F6 S<5 | 6 F4 S6 | 15 | 6 | 4 |
| 3:1 | 14 F14 S<8 | 9 F9 S6 | 6 F5 S6 | 14 | 6 | 4 |
| 10:1 | ---- | 15 F<12 S15 | 8 F8 S8 | ---- | 8 | 7 |
| FYROL PBR : PEEOP 3:1 | 12 F12 S11 | 9 F<8 S9 | 7 F7 S5 | | 5 5 | 5 5 |
| 10:1 | 14 F14 S<13 | 15 F<14 S15 | 6 F7 S6 | 13 | 6 | 7 |

### EXAMPLES 9-15

The following data illustrates the parts of flame retardant (PEEOP and/or FYROL FR-2 brand) needed to actually pass the MVSS 302 test in a 1.5 density foam and the theoretical, predicted amount:

| Flame Retardant | Actual | Theoretical |
|---|---|---|
| 100% PEEOP | 5 | 5 |
| 1 PEEOP: 1 FR-2 | 6 | 10 |
| 1 PEEOP: 2 FR-2 | 7 | 11.7 |
| 1 PEEOP: 3 FR-2 | 6 | 12.5 |
| 1 PEEOP: 6 FR-2 | 8 | 13.6 |
| 1 PEEOP: 10 FR-2 | 8 | 14.1 |
| 100% FR-2 | 15 | 15 |

The above data demonstrates that for each of the tested blends, the actual amount of flame retardant needed to pass the test was unexpectedly lower than would be predicted from a simple arithmetic averaging of the expected level from evaluation of the amount needed to pass the test for each of the neat materials forming the tested blend.

### EXAMPLES 10-14

The following data illustrates the parts of flame retardant (PEEOP and/or FYROL FR-2 brand) needed to actually pass the MVSS 302 test and the TB 117 tests in a 1.0 density foam:

| Flame Retardant | MVSS 302 | TB 117 |
|---|---|---|
| 100% FYROL FR-2 | 16 | 16 |
| 3 FR-2: 1 PEEOP | 14 | 14 |
| 1 FR-2: 1 PEEOP | 15 | 12 |
| 3 PEEOP: 1 FR-2 | 15 | 15 |
| 100% PEEOP | 7 | 7 |

The following additional data was obtained:

| SAMPLE | Total %P to pass TB117 | Viscosity @25°C (mPa.s) | Density kg.m⁻³ | Air Flow dm³/sec |
|---|---|---|---|---|
| FYROLFR-2(neat) | 1.14 | 1800 | 16.5 | 2.74 |
| FR-2/PEEOP 3:1 | 1.40 | 2400 | 15.4 | 2.88 |
| FR-2/PEEOP 1:1 | 1.56 | 1800 | 17.0 | 1.93 |
| PEEOP/FR-2 3:1 | 2.40 | ---- | 17.0 | 1.98 |
| PEEOP (neat) | 1.33 | 2300 | 16.0 | 2.17 |

### EXAMPLES 15-19

The following data illustrates the parts of flame retardant (PEEOP and/or FYROL FR-2 brand) needed to actually pass the MVSS302 test and the TB117 tests in 1.8 density foam:

| Flame Retardant | MVSS 302 | TB 117 |
|---|---|---|
| 100% FYROL FR-2 | 7 | 14 |
| 3 FR-2 : 1 PEEOP | 4 | 6 |
| 1 FR-2 : 1 PEEOP | 4 | 6 |
| 3 PEEOP: 1 FR-2 | 3 | 5 |
| 100% PEEOP | 4 | 5 |

The following additional data was obtained:

| SAMPLE ID | Total %P to pass TB117 | Total % P to pass MVSS302 | Density kg.m⁻³ | Air Flow dm³/sec |
|---|---|---|---|---|
| FYROL FR-2 (neat) | 0.99 | 0.50 | 30.3 | 2.45 |
| FR-2/PEEOP 3:1 | 0.60 | 0.40 | 29.5 | 2.55 |
| FR-2/PEEOP 1:1 | 0.78 | 0.52 | 29.5 | 2.83 |
| PEEOP/FR-2 3:1 | 0.80 | 0.48 | 28.5 | 2.93 |
| PEEOP (neat) | 0.95 | 0.76 | 29.6 | 2.83 |

### EXAMPLES 20-24

The following data illustrates the parts of flame retardant (PEEOP and/or FYROL FR-2 brand) needed to actually pass the MVSS 302 test and the TB117 tests in 1.5 density foam:

| Flame Retardant | MVSS 302 | TB 117 |
|---|---|---|
| 100% FYROL FR-2 | 15 | 15 |
| 3 FR-2 : 1 PEEOP | 6 | 9 |
| 1 FR-2 : 1 PEEOP | 6 | 6 |
| 100% PEEOP | 5 | 5 |

The following additional data was obtained:

| SAMPLE ID | Total % P to pass TB117 | Total % P to pass MVSS302 | Density kg.m⁻³ (lb/ft³) | Air Flow dm³/sec (ft³/min) |
|---|---|---|---|---|
| FYROL FR-2 (neat) | 1.07 | 1.07 | 24.0 (1.50) | 2.93 (6.2) |
| FR-2/PEEOP 3:1 | 0.90 | 0.60 | 25.3 (1.58) | 2.78 (5.9) |
| FR-2/PEEOP 1:1 | 0.78 | 0.78 | 24.2 (1.51) | 2.78 (5.9) |
| PEEOP (neat) | 0.95 | 0.95 | 24.2 (1.51) | 2.45 (5.2) |

From an analysis of all of the foregoing data, a number of conclusions can be reached:
Generally speaking, an increase in the density of the foam will reduce the amount of flame retardant that is needed to pass a specific flame retardancy test.
There appeared to be no advantage to blending the FYROL FR-2 brand material with the PEEOP additive on a 1.0 density foam, since the FR-2 additive passes the TB 117 test at 16 parts, the PEEOP at 7, and blends at 14-15.
For 1.5 and 1.8 density foams, blends (3:1) of the FR-2:PEEOP additives showed improvement over use of the neat FR-2 material, since the blends passed the TB117 test at 6 parts whereas the neat FR-2 material passed at 14 parts. The blend, while containing only 25% of the PEEOP component, is nearly as efficient as neat PEEOP (which passed at 4-5 parts in a 1.5 or 1.8 density foam) but would be much less expensive to produce due to the larger amount of the cheaper FR-2 material.
The 1:1 and 3:1 ratios of FR-2:PEEOP in a 1.5 density foam are of interest. The 1:1 ratio blend shows an advantage (pass: 6 parts in MVSS 302 test) over the use of the neat FR-2 material (pass: 15 parts). The 3:1 blend is equivalent (pass: 6 parts) in performance to the 1:1 ratio material but is less expensive because it contains a greater proportion of the cheaper FR-2 material. It is also advantageous to use the 3:1 ratio material in 1.8 density foam.

### EXAMPLES 25-34

These Examples illustrate the flammability efficiency of the FYROL PCF brand and PEEOP flame retardants at two different ratios, 6:1 and 3:1, in a 1.5 pcf density foam. For example, a PCF/PEEOP blend at a 3:1 ratio does show a minimum level of synergistic efficiency, but the use of the FYROL PCF brand additive (also having poor fogging performance) is clearly less synergistic than the preferred FYROL FR-2 brand/FYROL PBR brand blends:

| Product | Amount used polyol%w/w | Density kg.m⁻³ (lb/ft³) | Air Flow dm³/sec (ft³/min) | Cal 117A / Cal 117D% | MVSS 302 |
|---|---|---|---|---|---|
| FYROL PCF | 14 | 24.3 (1.52) | 2.97 (6.3) | 2.5"/ Fail 65% | SE |
| FYROLPCF | 10 | 24.3 (1.52) | 2.60 (5.5) | 2.8"/ Fail 65% | SENBR |
| PCF/PEEOP 6:1 ratio | 14 | 24.2 (1.51) | 2.22 (4.7) | 2.10"/ Fail 75% | SE |
| PCF/PEEOP 6:1 ratio | 13 | 24.0 (1.50) | 2.03 (4.3) | 2.10"/ Fail 74% | SE |
| PCF/PEEOP 6:1 ratio | 12 | 23.9 (1.49) | 1.98 (4.2) | 2.20"/ Fail 76% | SE |
| PCF/PEEOP 6:1 ratio | 11 | 24.2 (1.51) | 1.98 (4.2) | 2.10"/ Fail 85% | SE |
| PCF/PEEOP 3:1 ratio | 10 | 24.0 (1.50) | 1.93 (4.1) | 2.0"/ 3.1" 93% | SE |
| PCF/PEEOP 3:1 ratio | 9 | 23.9 (1.49) | 2.03 (4.3) | 2.2"/ Fail 92% | SE |
| PCF/PEEOP 3:1 ratio | 8 | 23.7 (1.48) | 1.89 (4.0) | 2.0"/ Fail 94% | SE |
| PCF/PEEOP 3:1 ratio | 7 | 24.2 (1.51) | 1.98 (4.2) | 2.0"/ Fail 88% | SE |

The foregoing Examples merely illustrate certain embodiments of the present invention and for that reason should not be construed in a limiting sense. The scope of protection that is sought is set forth in the claims that follow.

## Claims

1. A flame retardant blend comprising: (a) a monomeric halogenated organic flame retardant that is adapted for use in a polyurethane foam formulation; and (b) an oligomeric organophosphate flame retardant having a phosphorus content of no less than 10%, by weight, and at least three phosphate ester units therein, the amount of (a) in the blend being no less than the amount of (b).

2. A blend as claimed in Claim 1 wherein flame retardant (a) consists predominantly of a halogenated phosphate ester.

3. A blend as claimed in Claim 1 or 2 wherein flame retardant (a) further comprises a polybrominated diphenyl oxide.

4. A blend as claimed in any one of Claims 1 to 3 wherein flame retardant (a) is present in amount from 50% to 95% by weight of the blend.

5. A blend as claimed in any one of Claims 1 to 4 wherein the oligomeric organophosphate flame retardant is of the formula: 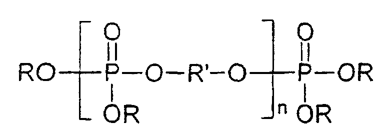 wherein n, on a number average basis, lies in the range of from 2 to 20; R is selected from the group consisting of alkyl, haloalkyl, and of hydroxyalkyl, and R' is alkylene.

6. A blend according to Claim 5 wherein R and R' are ethyl and ethylene, respectively.

7. A polyurethane foam that contains an effective amount for flame retardancy of a flame retardant blend according to any one of Claims 1 to 6.

## Patentansprüche

1. Flammhemmende Mischung, umfassend: (a) einen monomeren halogenierten organischen Flammhemmer, der zur Verwendung in einer Polyurethanschaumzubereitung geeignet ist; und (b) einen oligomeren Organophosphat-Flammhemmer mit einem Phosphorgehalt von nicht weniger als 10 Gew.-%, der wenigstens drei Phosphorsäureestereinheiten enthält, wobei die Menge an (a) in der Mischung nicht kleiner ist als die Menge an (b).

2. Mischung gemäß Anspruch 1, wobei der Flammhemmer (a) vorwiegend aus einem halogenierten Phosphorsäureester besteht.

3. Mischung gemäß Anspruch 1 oder 2, wobei der Flammhemmer (a) weiterhin ein polybromiertes Diphenyloxid umfasst.

4. Mischung gemäß einem der Ansprüche 1 bis 3, wobei der Flammhemmer (a) in einer Menge von 50 bis 95 Gew.-% der Mischung vorhanden ist.

5. Mischung gemäß einem der Ansprüche 1 bis 4, wobei der oligomere Organophosphat-Flammhemmer die folgende Formel hat: 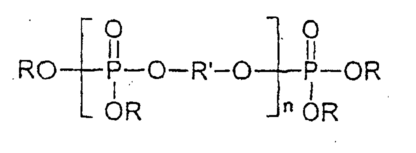 wobei n auf der Basis des Zahlenmittels im Bereich von 2 bis 20 liegt, R aus der Gruppe ausgewählt wird, die aus Alkyl, Halogenalkyl und Hydroxyalkyl besteht, und R' Alkylen ist.

6. Mischung gemäß Anspruch 5, wobei R und R' Ethyl bzw. Ethylen ist.

7. Polyurethanschaum, der eine zur Flammhemmung effektive Menge einer flammhemmenden Mischung gemäß einem der Ansprüche 1 bis 6 enthält.

## Revendications

1. Mélange retardateur de flammes comprenant : (a) un retardateur de flammes organique halogéné monomère qui est adapté à une utilisation dans une formulation de mousse de polyuréthane ; et (b) un retardateur de flammes organophosphaté oligomère ayant une teneur en phosphore d'au moins 10 % en poids, et contenant au moins trois motifs ester-phosphate, la quantité de (a) dans le mélange étant au moins égale à la quantité de (b).

2. Mélange selon la revendication 1, dans lequel le retardateur de flammes (a) est constitué essentiellement d'un ester-phosphate halogéné.

3. Mélange selon la revendication 1 ou 2, dans lequel le retardateur de flammes (a) comprend en outre un oxyde de diphényle polybromé.

4. Mélange selon l'une quelconque des revendications 1 à 3, dans lequel le retardateur de flammes (a) est présent en une quantité de 50 à 95 % en poids du mélange.

5. Mélange selon l'une quelconque des revendications 1 à 4, dans lequel le retardateur de flammes organophosphaté oligomère est de formule : 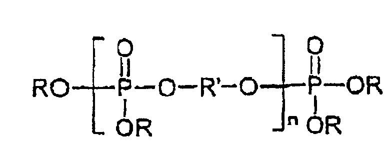 dans laquelle n, sur une base moyenne en nombre, est situé dans la plage de 2 à 20 ; R est choisi dans le groupe constitué d'un alkyle, d'un halogénoalkyle, et d'un hydroxyalkyle, et R' est un groupe alkylène.

6. Mélange selon la revendication 5, dans lequel R et R' sont l'éthyle et l'éthylène, respectivement.

7. Mousse de polyuréthane qui contient une quantité efficace pour assurer l'ininflammabilité d'un retardateur de flammes selon l'une quelconque des revendications 1 à 6.
